# EUROPEAN PATENT APPLICATION

(11) **EP 3 901 811 A1**
(43) Date of publication of application: **27.10.2021**
(21) Application number: 20170364.2
(22) Date of filing: 20.04.2020
(51) Int. Cl.: G06F 40/242

(54) **GENERATING AND USING AN INDIVIDUAL DICTIONARY FOR MACHINE TRANSLATION**

(71) Applicant: Deepl GmbH, 50825 Köln (DE)
(72) Inventor:
(74) Representative: Maiwald Patent- und Rechtsanwaltsgesellschaft mbH

(57) **Abstract**

A computer-implemented method of generating, with a server (100) communicatively couplable to a user device (10) of a user, a dictionary entry for an individual dictionary for machine translation is provided. Therein, a request for an alternative translation for at least one word of a translated text is received at the server (100), and one or more translation suggestions are determined for one or more alternative translations for the at least one word of the translated text, wherein each translation suggestion is determined in dependence of a grammatical context of at least a part of the translated text. Further, a request for translating the at least one word of the translated text using a selected one of the one or more translation suggestions is received at the server (100), and one or more dictionary suggestions for at least one dictionary entry are determined based on the selected one of the one or more translation suggestions, wherein each dictionary suggestion is determined independent from the grammatical context of the at least part of the translated text. Further, the at least one dictionary entry of the individual dictionary is generated based on at least one of the one or more dictionary suggestions.

## Description

### Technical Field

The present invention generally relates to the field of machine translations for translating texts between different languages. In particular, the present invention relates to a computer-implemented method of generating a dictionary entry for an individual dictionary for machine translation, to a corresponding computer program, to a computer-readable medium storing such computer program, and to a server for machine translation. Further, the present invention relates to the use of an individual dictionary for machine translation and to the use of one or more dictionary entries of an individual dictionary for training an artificial intelligence engine and/or an artificial neural network for machine translation.

### Technical Background

Translating documents or texts manually can be time consuming, expensive and sometimes even error-prone, in particular when the interpreter or translator is not familiar with the context of the text or document that is to be translated. These drawbacks of manual translations, however, can be at least mitigated or even overcome by machine translation, which allows documents or texts to be translated between different natural languages in an automated and/or computer-controlled manner. Therein, a source text may be provided in a source language as input to a computing device, e.g. a server, that can translate the source text into a translated text in a target language different than the source language and provide the translated text as an output. For this purpose, various different types of machine translation approaches or techniques have been developed, such as for example rules-based approaches, statistical approaches, example-based approaches, and neural machine translation (or machine translation using an artificial neural network). Therein, a quality of the translation may depend on the type of machine translation approach applied to a given source text.

For translating a source text or a document comprising a source text between various language pairs, such as e.g. between a source language and a target language, users can, for example, access a server via a web interface on a user device, such as e.g. a personal computer, a smartphone, a mobile phone, a notebook, or the like. Optionally, the translation output of the server and/or the translated text, which the user may receive e.g. via a user interface of the user device, can then be manually overwritten, corrected and/or modified by the user.

Apart from that, one or more words of the machine-generated translated text can be manually overwritten by the user and, if necessary, a more adequate translation alternative for a word can be found with the help of alternative suggestions, which can be provided by the server and which can be presented to the user via the user interface of a user device. Therein, the computer-generated alternative suggestions usually relate to synonyms for one particular word in the source text and/or the translated text, without the consideration of the context and/or grammatical context, the source word in the source text and/or the corresponding target word in the translated text is used in. Therefore, use of such automatically provided suggestions can be limited, as an automatically provided suggestion may not suit the context and/or might not fit grammatically into the translated text.

In a more sophisticated approach to modify a translated text generated by machine translation, a user can search for an alternative translation of e.g. a phrase and/or a word, for example by selecting and/or clicking on a word in the translated text provided on a user interface of a user device. By this user action, one or more alternative translation suggestions can be displayed on the user interface, e.g. in a dropdown displayed below or near the selected word. Therein, the one or more alternative translation suggestions can, for example, be calculated, determined and/or computed by an artificial intelligence engine, such as e.g. an artificial neural network. Such computation can not only give an alternative translation suggestion for the selected word, but also for other parts of the translated text, such as e.g. the rest of a sentence that includes the selected word. Alternative translation suggestions computed in this manner can include, for instance, synonyms, particular verb forms with a varying degree of formality and/or the restructuring of a clause part or a clause. Upon selecting an alternative translation suggestion by the user, the chosen alternative translation suggestion can be inserted into the translated text and/or the translated sentence from the selected word.

Furthermore, some machine translation systems allow the user to generate a dictionary or a dictionary entry of a dictionary by manually entering source and target words for the translation in a graphical user interface. Such manual creation of a dictionary may require significant user efforts and may be even error prone. Also, certain spellings preferred by a user can be stored in a word list or dictionary, so that, for example, in the case of spelling corrections, the spelling of a word preferred by the user is not marked as an error. Such dictionaries and/or dictionary entries, however, rigidly associate a word in a source language with a specific translation of this word in the target language. Therefore, such dictionaries and/or dictionary entries may not be applicable for different source texts and/or may not be automatically applied to translations of different source texts, e.g. initiated by the user in future. In turn, this may require a user to manually modify a certain word or to request an alternative translation for that word every time it is used in the same source text and/or in different source texts, e.g. in different grammatical forms of said word.

### Summary

It may therefore be desirable to provide for an improved method of generating a dictionary entry for an individual dictionary for machine translation and for an improved method of using such individual dictionary for machine translation, as well as for an improved system, server, and/or user device for machine translation.

This is achieved by the subject matter of the independent claims, wherein further embodiments are incorporated in the dependent claims and the following description.

In the following, various aspects as well as embodiments and examples of those aspects of the present disclosure are described. It should be noted that various aspects of the present disclosure relate at least in part, primarily or entirely to one or more of at least one server, at least one user device, and at least one system, which comprises at least one server and at least one user device. In other words, the present invention may be considered as being dispersed among one or more of at least one server, at least one user device, and/or among components or parts of the system.

It is emphasized, however, that any feature, step, function, element, technical effect and/or advantage described hereinabove and hereinbelow with reference to one aspect of the present disclosure, equally applies to any other aspect of the present disclosure, as described hereinabove and hereinbelow.

According to a first aspect of the present disclosure, there is provided a computer-implemented method of generating, with at least one server communicatively couplable to at least one user device of at least one user, a dictionary entry for an individual dictionary for machine translation, such as e.g. a machine translation of a source text in a source language into a translated text in a target language. Alternatively or additionally, the method according to the first aspect of the present disclosure may relate to a computer-implemented method of generating an individual dictionary. Alternatively or additionally, the method according to the first aspect may relate to a method of operating at least one server and/or at least one system including the at least one server and at least one user device. The method according to the first aspect comprises the following steps:
- receiving, at the server, a request for an alternative translation for at least one word of a translated text, the translated text relating to, being representative of and/or being a machine translation of a source text from a source language into a target language different than the source language;
- determining, computing and/or calculating, at the server, one or more translation suggestions for one or more alternative translations for the at least one word of the translated text, wherein each translation suggestion is determined in dependence of a grammatical context of at least a part of the translated text;
- receiving, at the server, a request for translating the at least one word of the translated text using a selected one of the one or more translation suggestions;
- determining, computing and/or calculating, at the server, one or more dictionary suggestions for at least one dictionary entry based on the selected one of the one or more translation suggestions, wherein each dictionary suggestion is determined independent from the grammatical context of the at least part of the translated text; and
- generating the at least one dictionary entry of the individual dictionary based on at least one of the one or more dictionary suggestions, wherein the at least one dictionary entry is indicative, representative and/or descriptive of a meaning of the at least one word in the source language and a meaning of the at least one word in the target language.

By determining the one or more dictionary suggestions for the at least one dictionary entry based on the selected one of the one or more translation suggestions, the at least one dictionary entry can be generated for the user in an intuitive, seamless and automated manner, while comprehensively taking into account the user's individual preference for translating the at least one word from the source language into the target language using the selected one of the one or more translation suggestions. Accordingly, user efforts involved in the process of generating a dictionary entry may be reduced or minimized, while ensuring that the generated dictionary entry correctly reflects the user's individual preferences, such as e.g. a personal writing style and/or a preferred vocabulary of the user. Moreover, as will be described and discussed in more detail hereinbelow, the one or more dictionary entries and/or the individual dictionary generated in accordance with the method according to the first aspect of the present disclosure can be applied to the entire source text and/or any further source text to be translated by the user, which allows for a consistent translation of the at least one word based on the individual dictionary, in particular regardless of a grammatical form, in which the at least one word may be used and/or occur in the source text and/or any further source text to be translated.

In the context of the present disclosure, the "individual dictionary" may refer to a personal dictionary of the user, a user-specific dictionary and/or a dictionary associated with the user. Therein, the individual dictionary (also referred to as "dictionary" in the following) may be stored on the at least one server and/or on the user device.

Further, the individual dictionary can comprise one or more dictionary entries, such as the at least one dictionary entry generated with the method according to the first aspect of the present disclosure. Therein, each dictionary entry of the individual dictionary may comprise a first dictionary element and a second dictionary element, wherein the first dictionary element may correspond to and/or be indicative of a meaning of one or more words in the source language, and wherein the second dictionary element may correspond to and/or be indicative of a meaning of the one or more words in the target language. Accordingly, the at least one dictionary entry of the individual dictionary that is generated based on at least one of the one or more dictionary suggestions for the at least one word may comprise a first dictionary element indicative of the meaning of the at least one word in the source language and a second dictionary element indicative of the meaning of the at least one word in the target language. Therein, the meaning of the at least one word (and/or the at least one word) in the source language may be referred to as "source word" and the meaning of the at least one word (and/or the at least one word) in the target language may be referred to as "target word" in the following.

Generally, the source language and the target language may each refer to a natural language and/or a spoken language, such as for example English, German, French, Italian, Chinese, Japanese, Arabic, and the like, wherein the source and the target language differ from one another. In other words, the source language and the target language may refer to different natural languages and/or different spoken languages.

In the context of the present disclosure, the server may comprise at least one computing device. It should be noted, however, that the server may refer to a server system, a computer system, a server network, a computing network, a cloud computing network or the like. Accordingly, any reference to "a server" or "the server" should be construed as also including a plurality of servers and/or computing devices.

Generally, the source text can be provided as input to the server in various forms, such as for example in the form of a textual input, a document, a text string, an image of a text, and/or an acoustic message. The server may be configured to process the source text and/or the corresponding input and translate or convert the source text into the translated text based on translating the source text from the source language into the target language. For the actual translation of the source text into the translated text, for example, a rules-based approach, a statistical approach, an example-based approach, and/or an artificial intelligence engine, e.g. an artificial neural network, may be implemented on, used by and/or applied by the server. For example, the server may comprise one or more processors for processing the source text and translating the source text into the translated text.

The server may be configured to communicate with the user device via a communication link and/or a communication connection between the server and the user device, e.g. using one or more communication protocols, standards or technologies. For this purpose, the server may comprise a communication arrangement couplable with a corresponding communication circuitry of the user device to allow data exchange between the user device and the server. By way of example, the server may be couplable and/or may be configured to communicate with the user device (and vice versa) via an Internet connection, a WiFi connection, a Bluetooth connection, a mobile phone network, a 3G connection, an edge connection, an LTE connection, a BUS connection, a wireless connection, a wired connection, a radio connection, a near field connection, an loT connection or any other connection using any appropriate communication protocol. For example, the communication arrangement of the server may be configured for receiving one or more requests from the user device, for receiving the source text from the user device, for transmitting one or more queries to the user device, for transmitting the translated text to the user device, for transmitting the one or more translation suggestions to the user device, for transmitting the one or more dictionary suggestions to the user device, for transmitting one or more dictionary entries to the user device, for receiving one or more dictionary entries from the user device, and/or for exchanging other data or information.

In the context of the present disclosure, the user device may refer to any device or apparatus configured to communicate with the server, e.g. based on exchanging data or information with the server. Generally, the user device may be a handheld or portable device. Alternatively, the user device may be a stand-alone or fixedly installed device. By way of example, the user device may refer to a handheld, a smart phone, a personal computer ("PC"), a tablet PC, a notebook, and/or a computer.

The user device may comprise a user interface for displaying the source text, the translated text, the one or more translation suggestions, the one or more dictionary suggestions, the at least one dictionary entry and/or other data or information. Further, the user interface may be configured to receive a user input from the user, such as e.g. a user input indicative of the request for the alternative translation of the at least one word in the source text. In a nonlimiting example, a web interface may be provided on the user interface of the user device for communicating and/or interacting with the server. Alternatively or additionally, a computer program, software or app may be stored on the user device, which allows to interact and/or communicate with the server. Further, the user device may comprise a control circuitry with one or more processors for data processing and/or a data storage for storing data, such as e.g. the source text, the translated text, one or more dictionary entries and/or the individual dictionary.

In the context of the present disclosure, "the at least one word" of the translated text, for which the request for alternative translation is received at the server, may denote and/or refer to any textual element of the translated text, such as e.g. a single word, a plurality of words, a term, multiple terms, a sentence, a part of a sentence, a clause and/or a phrase of the translated text.

In an example, the request for alternative translation may be generated at the user device, e.g. based on a user input, and transmitted from the user device to the server. For instance, upon and/or in response to receiving the request for alternative translation at the server, the one or translation suggestions may be determined at the server.

In the context of the present disclosure, each translation suggestion may correspond to an alternative translation of the at least one word in the translated text and/or in the target language with respect to an initial translation of the at least word, e.g. which may have been generated by the server and/or provided by the server to the user device previously and/or initially. For instance, a meaning of the at least one word in the initial translation may differ from a corresponding meaning of the at least one word in the one or more translation suggestions. Further, each of the one or more translation suggestions is determined in dependence of a grammatical context of at least a part of the translated text. This may mean that each of the one or more translation suggestions can be determined in context and/or in grammatical context of the at least part of the translated text. In other words, each of the one or more translation suggestions can be determined by the server taking the context and/or grammatical context of the at least one word in the at least part of the translated text into account. For example, a temporal context of the at least part of the translated text can be taken into account, such as whether the at least one word is used in the at least part of the translated text is in the past, present or future tense. Alternatively or additionally, a degree of formality, such as e.g. a formal or informal addressing as used in the German expressions "Sie" and "Du", can be taken into account for the determination of the one or more translation suggestions.

Accordingly, each of the one or more translation suggestions may be determined, such that it grammatically fits and/or grammatically correctly fits into the translated text and/or the at least part thereof. Therein, "the at least part of the translated text" can refer to a section, a chapter, a paragraph, one or more sentences, a clause, a part of a clause, and/or at least one word of the translated text. For instance, the grammatical context of at least a part of a clause and/or at least a part of a sentence, which may contain the at least one word, can be taken into account for determining the one or more translation suggestions.

Further, in the context of the present disclosure, each dictionary suggestion is determined independent from the grammatical context, out of the context, and/or out of the grammatical context of the at least part of the translated text. Alternatively or additionally, each dictionary suggestion is determined independent from the grammatical context, out of the context, and/or out of the grammatical context of the at least one word in the translated text and/or in the at least part of the translated text. This may mean that each of the one or more dictionary suggestions can be determined irrespective of the grammatical context of the at least part of the translated text and/or irrespective of the grammatical context of the at least one word in the at least part of the translated text. In other words, each of the one or more dictionary suggestions can be determined by the server without taking the context and/or grammatical context of the at least one word in the at least part of the translated text into account. Therein, each of the one or more dictionary suggestions may, for example, comprise one or more words (e.g. a word or phrase) in the source language to be translated and one or more translated words (e.g. a translated word or a translated phrase) in the target language, into which the one or more words are to be translated.

Since the grammatical context of the at least part of the translated text may be taken into consideration for determining the one or more translation suggestions, whereas this grammatical context may not be taken into consideration for determining the one or more dictionary suggestions, the one or more translation suggestions and the one or more dictionary suggestions may differ from another, e.g. in terms of grammatical form. This may in turn mean that the one or more dictionary suggestions may not necessarily fit into the translated text and/or the at least part thereof in terms of the grammatical context and/or in terms of grammar of the translated text. The one or more dictionary suggestions, however, may be configured for, suitable for, representative of, descriptive of and/or indicative of a general translation of the at least one word from the source language into in the target language, e.g. as preferred by the user and/or as indicated by the selected one of the one or more translations suggestions, irrespective of an actual source text and/or a grammatical context thereof.

Further, as the at least one dictionary entry is determined based on at least one of the dictionary suggestions, also the at least one dictionary entry can be configured for, suitable for, representative of, descriptive of and/or indicative of a general translation of the at least one word in the target language, e.g. as preferred by the user and/or as indicated by the selected one of the one or more translations suggestions, irrespective of an actual source text and/or a grammatical context thereof. Hence, the at least one dictionary entry may be versatilely applicable for translating any source text from the source language into the target language. Accordingly, the at least one dictionary entry generated according to the method of the first aspect of the present disclosure can be regarded as and/or can be indicative of a generalized translation of the at least one word from the source language into the target language, e.g. generalized in terms of a grammatical context, grammar and/or a grammatical form, in which the at least one word may be used and/or occur in any source text in the source language.

By using such a generalized translation for the at least one dictionary entry, the at least one dictionary entry may be more comprehensible and/or meaningful for the user, e.g. when compared to a rigid word-by-word dictionary, in which the at least one word may be stored exactly as it occurs in the source text and as it is translated into the source language (i.e. taking the grammatical context of the source text into account). Moreover, the at least one dictionary entry may be applicable to and/or usable for a translation of the at least one word in any source text from the source language into the target language, regardless of the grammatical context of such source text and/or regardless of the grammatical form, in which the at least one word may be used therein. In turn, this may allow to provide a consistent translation, e.g. consistent throughout an entire source text and/or consistent throughout a plurality of different source texts, for the at least one word from the source language into the target language, thereby reflecting an individual preference for, vocabulary and/or a style of the user. Apart from that, by using such a generalized translation for the at least one dictionary entry, a quality of the translated text can be improved, in particular when using an artificial intelligence engine and/or an artificial neural network for machine translation that has been trained accordingly.

According to an embodiment, the one or more translation suggestions are determined at the server using an artificial intelligence engine (also referred to as "Al engine" or "AI module" hereinafter) and/or an artificial neural network (also referred to as "neural network" hereinafter) implemented on the server. By using an AI engine and/or a neural network for determining the one or more translation suggestions, the grammatical context of the at least part of translated text, which may comprise the at least one word, may be comprehensively taken into account for determining the one or more translation suggestions. Accordingly, it may be ensured that each of the one or more translation suggestions grammatically fits into the at least part of the translated text. Accordingly, a quality of the determined one or more translations suggestions may be improved when compared with other approaches for determining the one or more translation suggestions.

Generally, the AI engine and/or the neural network may refer to a classifier and/or classifier circuitry configured to generate the translated text, e.g. by providing a classification result based on one or more inputs and/or input data, such as the source text and/or data corresponding thereto. Therein, the AI engine and/or the neural network may be implemented on the server, e.g. based on employing and/or running one or more machine learning algorithms on one or more processors and/or data processing devices. Such machine learning algorithm may be based e.g. on logistic regression, a support vector method, boosting, a naive Bayes method, a Bayesian network, a k-Nearest Neighbors algorithm, an artificial neural network, a convolutional neural network, Kernel-density estimation, Gaussian regression, a generative adversarial network, a sum product network, an adversarial neural network, or the like.

According to an embodiment, the one or more dictionary suggestions are determined at the server using an artificial intelligence engine and/or an artificial neural network implemented on the server. For instance, the one or more translation suggestions may be fed into the AI engine and/or the neural network to determine the one or more dictionary suggestions based on the one or more translation suggestions. Accordingly, determining the one or more dictionary suggestions may comprise converting the one or more translation suggestions into the one or more dictionary suggestions based on supplying the one or more translation suggestions to the AI engine and/or the neural network. By determining the one or more dictionary suggestions using the AI engine and/or the neural network, it may be ensured that the at least one dictionary entry, which is generated based on one of the dictionary suggestions, can be reliably applied to future translations, e.g. of the same source text and/or of a further source text, in particular regardless or irrespective of the grammatical context of the at least one word in the source text and/or the further source text. In turn, this may result in a high-quality and/or accurate translation of the at least one word as used in any grammatical context and/or as used in any grammatical form in the source text and/or in any further source text to be translated.

According to an embodiment, generating the at least one dictionary entry comprises selecting the at least one of the one or more dictionary suggestions as the at least one dictionary entry. In other words, one of the one or more dictionary suggestions may be selected as the at least one dictionary entry. It should be noted, however, that also a plurality of dictionary suggestions may be selected, wherein each selected dictionary suggestion may represent and/or constitute a dictionary entry for the individual dictionary.

According to an embodiment, the at least one of the one or more dictionary suggestions is selected automatically by the server. For instance, the server may be configured to select the at least one of the one or more dictionary suggestions based on one or more predefined criteria, such as e.g. a number of dictionary suggestions generated and/or user-specific criteria, and/or based on a likelihood or degree of correctness of the one or more dictionary suggestions. By automatically selecting one of the dictionary suggestions as the at least one dictionary entry, the at least one dictionary entry can be generated at minimum user effort or even without requiring user effort.

According to an embodiment, selecting the at least one of the one or more dictionary suggestions comprises:
- providing the one or more dictionary suggestions to the user device and transmitting a query to the user device for querying the user to select one of the one or more dictionary suggestions; and
- receiving a selection decision from the user device, wherein the selection decision is indicative of the at least one dictionary suggestion selected by the user.
Accordingly, the one or more dictionary suggestions may be inspected by the user on the user device and one of the dictionary suggestions may be selected by the user, e.g. based on a corresponding user input on the user interface, such as e.g. a click on one of the dictionary suggestions. Based on and/or in response to such user input, the selection decision may be generated and transmitted to the server.

According to an embodiment, the one or more dictionary suggestions are determined, at the server, upon and/or in response to receiving the request for translating the at least one word of the translated text using the selected one of the one or more translation suggestions. In other words, receiving, at the server, the request for translating the at least one word of the translated text using the selected one of the one or more translation suggestions, may trigger determination, calculation, and/or computation of the one or more dictionary suggestions. This may ensure that each time the user requests an alternative translation, also one or more dictionary suggestions and/or at least one dictionary entry can be generated, such that the individual dictionary can be filled with dictionary entries overtime, thereby increasingly reflecting the user's preferences for translating certain words.

According to an embodiment, the method further comprises transmitting a query to the user device for querying the user whether the at least one word is to be translated in a further source text and/or in a future translation based on the selected one of the one or more translation suggestions and/or based on the generated at least one dictionary entry, wherein the one or more dictionary suggestions are determined at the server in response to and/or upon receiving a user request indicating that the at least one word is to be translated in a further source text and/or in a future translation based on the generated at least one dictionary entry. In other words, receipt of the user request at the server may trigger determination, calculation, and/or computation of the one or more dictionary suggestions. This may ensure that the dictionary suggestions are only determined by the server if required and/or requested by the user. In turn, usage of computing resources at the server may be reduced.

For example, the query may be provided to the user in the form a question, a tick box, or the like. The user request may be generated based on an answer to the question, based on an activation of the tick box and/or any other user input on the user interface. Therein, the user request may indicate the user's intention to translate the at least one word in any future translation, e.g. of the source text and/or any further source text, based on the selected translations suggestion, and hence based on the at least one dictionary entry generated based thereon (and/or based on a dictionary suggestion corresponding to or associated with the selected translation suggestion). Consequential thereto, the at least one dictionary entry may be applied to any translation of any source text comprising the at least one word in any grammatical form.

In conventional machine translations, it has so far been necessary for the user to manually overwrite the at least one word multiple times in a source text and/or to adapt translation suggestions by synonym in order to use an individually common vocabulary for the translation of certain terms, phrases and/or words. This however, may mean that when a user for example wants to modify a translated word "A" to "B" but the machine translation for "A" is "C", the user may have to go through the whole translated text and may have to make this modification for all translations of "A", meaning that the user's adaption for one term within the translation, may not affect the rest of the translation. By selecting a synonym suggested by the neural network, the neural network may not notice that the user always wants to use the selected synonym to translate a certain source word. In conventional machine translation systems, there is currently no query whether the user wants to use the selected alternative or dictionary entry as a translation for the source word in the future.

In contrast to this conventional approach, by querying the user and by receiving the user request indicating that the at least one word is to be translated in a further source text and/or in a future translation based on the generated at least one dictionary entry, a consistent translation of the at least one word can be provided for the user, irrespective of the grammatical form of the at least one word in a given source text and/or irrespective of the grammatical context, in which the at least one word may be used in a given source text.

According to an embodiment, the method further comprises:
- translating, at the server, the source text in the source language into the translated text in the target language; and
- providing, transmitting, and/or sending the translated text to the user device.
The translated text may correspond to an initial translation of the source text comprising an initial translation of the at least one word. The user may then request an alternative translation for the at least one word and/or for the initial translation thereof, e.g. based on clicking and/or selecting the at least one word on the user interface and/or based on any other user input. In response to such user input, the request for alternative translation may be generated and transmitted to the server, and the one or more translation suggestions may be generated at the server.

According to an embodiment, the method further comprises storing the at least one dictionary entry in a data storage of the server and/or in a data storage of the user device. Optionally, the step of storing the at least one dictionary entry may comprise generating and/or creating the individual dictionary. By storing the at least one dictionary entry on the user device, it may be ensured that the at least one dictionary entry can be applied to a translation of any source text using the user device. On the other hand, by storing the at least one dictionary entry on the server, it may be ensured that the user can access the individual dictionary using different user devices.

For example, the at least one dictionary entry and/or the individual dictionary may be stored in and/or associated with a user account on the server. For accessing the individual dictionary, the user may log into the account, e.g. based on entering user credentials.

Optionally, the user may manually edit, supplement, correct and/or modify one or more dictionary entries of the individual dictionary, e.g. by means of a software or app on the user device and/or via web interface on the user device for communicating with the server. Alternatively or additionally, the user may manually delete an existing dictionary entry and/or manually create an additional dictionary entry.

According to an embodiment, storing the at least one dictionary entry comprises adding the at least one dictionary entry to the individual dictionary of the user. In other words, the generated at least one dictionary entry may be added to an existing individual dictionary to supplement the dictionary. Alternatively, however, a new individual dictionary may be generated based on storing the at least one dictionary entry.

According to an embodiment, each of the one or more translation suggestions for the at least one word is determined in a first grammatical form taking into account the grammatical context of the at least part of the translated text, wherein each of the one or more dictionary suggestions for the at least one word is determined in a second grammatical form which differs from the first grammatical form. As described hereinabove, the one or more dictionary suggestions are determined independent of the grammatical context of the at least part of the translated text, such that the one or more dictionary suggestions can be regarded as generalized translations for the at least one word. For that reason, a grammatical form (or the first grammatical form) of the one or more translation suggestions can differ from the grammatical form (or the second grammatical form) of the one or more dictionary suggestions. For example, determining the one or more dictionary suggestions based on the one or more translation suggestions may comprise converting the one or more translation suggestions from the first grammatical form into the second grammatical form.

According to an embodiment, the first grammatical form and the second grammatical form differ in at least one of gender, number, case, temporal form, verb form, noun form, a word order, and a word sequence. It should be noted, however, that the invention is not limited to these differences. Rather, the first grammatical form and the second grammatical form can differ from one another in any grammatical aspect, which may even depend on the source and/or target language used for translation.

According to an embodiment, the second grammatical form for the at least one word, in which each of the one or more dictionary suggestions is determined, corresponds to a basic grammatical form of the at least one word in the source language and/or in the target language. By determining the one or more dictionary suggestions, and hence the at least one dictionary entry, in the basic grammatical form, the dictionary suggestions and/or the dictionary entry may be more comprehensible and/or meaningful for the user, e.g. when compared to a rigid word-by-word dictionary, in which the at least one word may be stored exactly as it occurs in the source text and as it is translated into the source language. Moreover, the at least one dictionary entry may be applicable to and/or usable for a translation of the at least one word in any source text from the source language into the target language, regardless of the grammatical context of such source text and/or regardless of the grammatical form, in which the at least one word may be used in a source text. In turn, this may allow to provide a consistent translation, e.g. consistent throughout an entire source text and/or consistent throughout a plurality of different source texts, for the at least one word from the source language into the target language, thereby reflecting the individual preference for, vocabulary of and/or a style of the user. Apart from that, by using one of the one or more dictionary suggestions in the basic grammatical form for the at least one dictionary entry, a quality of the translated text can be improved, in particular when using an artificial intelligence engine and/or an artificial neural network for machine translation that has been trained accordingly, e.g. since an AI engine may be better suited for and/or provide more accurate results when applying the basic grammatical form of the at least one word in a given source text, when compared to another grammatical form of the at least one word.

According to an embodiment, the at least one word is a verb, wherein the first grammatical form is an inflected verb form of the at least one word and the second grammatical form is an infinitive verb form of the at least one word in the target language and/or the source language.

According to an embodiment, the at least one word is a noun, wherein the first grammatical form is a plural noun form of the at least one word and the second grammatical form is a singular noun form of the at least one word in the source language and/or in the target language.

According to an embodiment, the method further comprises determining whether the at least one word is part of a multi-word phrase, e.g. a common multi-word phrase, a commonly used expression and/or a saying, wherein determining the one or more dictionary suggestions for the at least one dictionary entry comprises determining the multi-word phrase. In other words, the one or more dictionary suggestions may be a multi-word phrase. Accordingly, although a request for alternative translation may be received at the server only for a part, e.g. only for the at least one word, of a multi-word phrase, the server may determine that the at least one word is part of the multi-word phrase and determine one or more dictionary suggestions for the entire multi-word phrase.

According to an embodiment, each of the one or more dictionary suggestions comprises a source indicator indicative of the source language and a target indicator indicative of the target language. For example, a dictionary suggestion may comprise a first dictionary element indicative of the meaning of the at least one word in the source language, the source indicator for the source language, such as e.g. "DE" for German language, a second dictionary element indicative of the meaning of the at least one word in the target language, and the target indicator for the target language, such as e.g. "EN" for English language. Further, each of the dictionary entries of the individual dictionary may comprise a corresponding first dictionary element, second dictionary element, source indicator, and target indicator. This may allow to provide comprehensive information to the user about the dictionary suggestions and/or about the dictionary entries. Also, e.g. by storing such information in the individual dictionary, it may be ensured that each dictionary entry is only applied to the correct source language and/or the correct target language.

According to an embodiment, the method further comprises re-translating, at the server, the source text in the source language into a re-translated text in the target language based on and/or using the generated at least one dictionary entry of the individual dictionary, such that the at least one word and each further word and/or phrase corresponding to the at least one word, such as e.g. the at least one word in a different grammatical form, is consistently translated in the re-translated text in accordance with the at least one dictionary entry. Accordingly, the at least one dictionary entry may be applied for translating the at least one word and each word and/or phrase corresponding thereto throughout the source text. This way, user efforts in replacing the at least one word and each further word and/or phrase corresponding thereto in the entire translated text can be reduced to a minimum, while ensuring that the re-translated text correctly reflects the user's preference, vocabulary and/or style.

According to an embodiment, the method further comprises identifying, e.g. in the source text and/or the translated text, each further word and/or phrase corresponding to the at least one word, and translating each identified further word and/or phrase corresponding to the at least one word into the target language based on and/or applying the at least one dictionary entry.

According to an embodiment, applying the at least one dictionary entry may comprise substituting, in the source text and/or the translated text, the at least one word and each further word and/or phrase corresponding to the at least one word according to the at least one dictionary entry. Alternatively or additionally, the at least one word and each further word and/or phrase corresponding to the at least one word can be converted from a grammatical form, e.g. the second grammatical form and/or the basic grammatical form, as indicated by the at least one dictionary entry into different grammatical form that grammatically fits into the corresponding part and/or section of the re-translated text, in which the at least one word and/or each further word and/or phrase corresponding thereto occurs.

For instance, the at least one word and/or each further word and/or phrase corresponding thereto can be inserted in to the source text in the basic grammatical form, thereby supplementing the source text, and the supplemented source text can then be re-translated using machine translation, in particular using the AI engine and/or the neural network implemented on the server, such that the at least one word and/or each further word and/or phrase corresponding thereto is converted into the correct grammatical form during translation.

According to an embodiment, the method further comprises transmitting the re-translated text to the user device along with an instruction to display the re-translated text on a user interface of the user device and to highlight each further word and/or phrase in the displayed re-translated text that was translated based on the at least one dictionary entry. This may allow the user to evaluate the effect of the individual dictionary and/or the at least one dictionary entry on the translation. Therein, each further word and/or phrase in the displayed re-translated text may be highlighted graphically, such as e.g. by a different font color, a different background color, an underline, a different font, a different font style, or the like.

It should be noted that for re-translating the source text, the at least one dictionary entry and one or more further dictionary entries for one or more further words can be used and/or applied.

According to an embodiment, the method further comprises:
- receiving, at the server, a further source text to be translated from the source language into a further translated text in the target language;
- providing one or more dictionary entries, e.g. including the at least one generated dictionary entry, applicable for translating the further source text; and
- translating, at the server, the further source text into the further translated text based on and/or applying the one or more dictionary entries.
Accordingly, the provided one or more dictionary entries may be applied for translating one or more words and/or phrases consistently throughout the further source text as indicated by the respective dictionary entries. Hence, it can be ensured that the further translated text correctly reflects the user's preference, vocabulary and/or style.

According to an embodiment, applying the one or more dictionary entries to the further source text may comprise substituting, in the further source text and/or the further translated text, one or more words and/or phrases as indicated by the respective one or more dictionary entries. Alternatively or additionally, the one or more words and/or phrases as indicated by the respective one or more dictionary entries may be converted from a grammatical form, e.g. the second grammatical form and/or the basic grammatical form, as indicated by the one or more dictionary entries into a different grammatical form that grammatically fits into the corresponding part and/or section of the further translated text.

For instance, one or more words and/or phrases as indicated by the respective one or more dictionary entries can be inserted in to the further source text in the basic grammatical form, thereby supplementing the further source text, and the supplemented further source text can then be translated using machine translation, in particular using the AI engine and/or the neural network implemented on the server, such that the one or more words and/or phrases as indicated by the respective one or more dictionary entries are converted into the correct grammatical form in the further translated text.

According to an embodiment, providing the one or more dictionary entries comprises receiving, at the server, the one or more dictionary entries from the user device. Accordingly, the one or more dictionary entries may be transmitted, e.g. along with the further source text, to the server. This may be of particular advantage if the individual dictionary is stored on the user device. Alternatively or additionally, providing the one or more dictionary entries comprises identifying the one or more dictionary entries in an individual dictionary stored on the server.

According to an embodiment, the method further comprises transmitting the further translated text to the user device along with an instruction to display the further translated text on a user interface of the user device and to highlight one or more words in the displayed further translated text, which one or more words were translated based on the one or more provided dictionary entries. This may allow the user to evaluate the effect of the individual dictionary and/or the one or more provided dictionary entries on the translation. Therein, the one or more words in the displayed further translated text may be highlighted graphically, such as e.g. by a different font color, a different background color, an underline, a different font, a different font style, or the like.

According to an embodiment, the method further comprises receiving one or more further dictionary entries of one or more further individual dictionaries of one or more further users, and combining the generated at least one dictionary entry and the received one or more further dictionary entries, thereby generating a common dictionary. Accordingly, one or more dictionary entries of one or more individual dictionaries of one or more users may be combined and/or merged into the common dictionary. For example, this may allow a group of users to share the common dictionary among each other, thereby ensuring that each member of the group of users can consistently apply the dictionary entries of the common dictionary to any source text.

According to a second aspect of the present disclosure, there is provided a computer program, which when executed by one or more processors of a server, instructs the server to perform steps of the method according to the first aspect of the present disclosure, as described hereinabove and hereinbelow. The computer program may, for instance, be stored on a data storage or memory of the server.

According to a third aspect of the present disclosure, there is provided a non-transitory computer-readable medium having stored thereon the computer program according to the second aspect of the present disclosure.

A fourth aspect of the present disclosure relates to a computer-implemented method of translating a source text in a source language into a translated text in a target language. Alternatively or additionally, the method according to the fourth aspect may relate to a computer-implemented method of applying an individual dictionary, e.g. comprising at least one dictionary entry as generated with the method according to the first aspect of the present disclosure, for machine translation. Alternatively or additionally, the method according to the fourth aspect may relate to a method of operating at least one server and/or at least one system including the at least one server and at least one user device. The method according to the fourth aspect comprises the following steps:
- receiving, at the server, a source text to be translated from the source language into a further translated text in the target language;
- providing one or more dictionary entries applicable for translating the further source text; and
- translating, at the server, the source text into the translated text based on and/or applying the one or more dictionary entries, thereby converting one or more words and/or phrases as indicated by the provided one or more dictionary entries from a grammatical form, e.g. a basic grammatical form, as indicated by the one or more dictionary entries into a further grammatical form that differs from the grammatical form as indicated by the one or more dictionary entries.
It is emphasized that any feature, function element and/or step, as described hereinabove and hereinbelow with reference to the first aspect of the present disclosure, equally applies to the method according to the fourth aspect, and vice versa. Specifically, any example, embodiment, and/or exemplary embodiment described hereinabove and hereinbelow with respect to the first aspect of the present disclosure can be combined with the method according to the fourth aspect and/or any embodiment, example, and/or exemplary embodiment thereof.

For instance, one or more words and/or phrases as indicated by the respective one or more dictionary entries can be inserted into the source text in the grammatical form as indicated by the one or more dictionary entries, e.g. the basic grammatical form, thereby supplementing the source text, and the supplemented source text can then be translated using machine translation, in particular using the AI engine and/or the neural network implemented on the server, such that the one or more words and/or phrases as indicated by the respective one or more dictionary entries are converted into the further grammatical form in the translated text.

A fifth aspect of the present disclosure relates to a use of an individual dictionary, which comprises at least one dictionary entry generated in accordance with the method of the first aspect of the present disclosure, for machine translation of a source text in a source language into a translated text in a target language.

A sixth aspect of the present disclosure relates to a use of one or more dictionary entries generated in accordance with the method of the first aspect of the present disclosure for training an artificial intelligence engine and/or an artificial neural network for machine translation.

A seventh aspect of the present disclosure relates to a user device having stored thereon an individual dictionary, which comprises at least one dictionary entry generated in accordance with the method of the first aspect of the present disclosure.

According to an eighth aspect of the present disclosure, there is provided a server configured for performing steps of the method according to of the first aspect and/or the fourth aspect of the present disclosure, as described hereinabove and hereinbelow.

According to a ninth aspect of the present disclosure, there is provided a system comprising at least one server and at least one user device communicatively couplable to the at least one server, wherein the system and/or the at least one server is configured for performing steps of the method according to of the first aspect and/or the fourth aspect of the present disclosure, as described hereinabove and hereinbelow.

Any feature, function, step and/or element, which is described hereinabove and hereinbelow with reference to one aspect of the present disclosure, equally applies to any other aspect of the present disclosure, as described hereinabove and hereinbelow.

These and other aspects of the disclosure will be apparent from and elucidated with reference to the exemplary embodiments described hereinafter.

### Brief Description of the Drawings

The subject-matter of the disclosure will be explained in more detail in the following with reference to exemplary embodiments which are illustrated in the attached drawings, wherein:
Fig. 1 shows a system for machine translation and/or a system for generating a dictionary entry for an individual dictionary for machine translation according to an exemplary embodiment;
Fig. 2 shows a user device of the system of Fig. 1;
Fig. 3 shows a server of the system of Fig. 1;
Fig. 4 shows a flow chart illustrating steps of a method of generating a dictionary entry for an individual dictionary for machine translation according to an exemplary embodiment;
Fig. 5 shows a flow chart illustrating steps of a method of generating a machine translation according to an exemplary embodiment; and
Fig. 6 shows a flow chart illustrating steps of a method of generating a dictionary entry for an individual dictionary for machine translation according to an exemplary embodiment.

The figures are only schematic and not true to scale. In principle, identical or like parts are provided with identical or like reference symbols in the figures.

### Detailed Description of Exemplary Embodiments

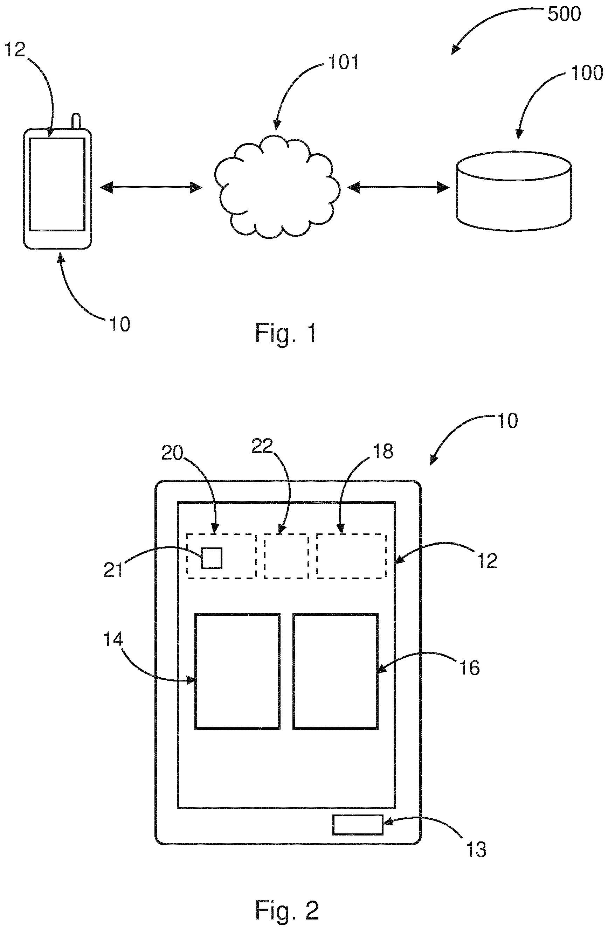

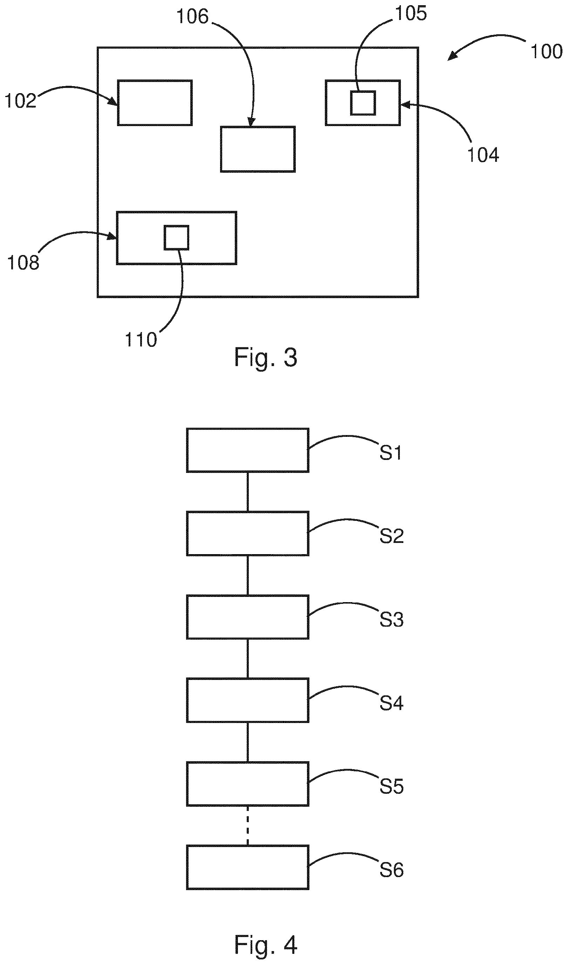

Figure 1 shows a system 500 for machine translation and/or a system 500 for generating a dictionary entry for an individual dictionary for machine translation according to an exemplary embodiment. The system 500 comprises a user device 10, which is shown in more detail in Figure 2, and a server 100, which is shown in more detail in Figure 3.

In the example shown in Figures 1 and 2, the user device 10 is a handheld user device 10. Alternatively, the user device 10 may be a stand-alone or fixedly installed device. By way of example, the user device 10 may refer to a handheld, a smart phone, a personal computer ("PC), a tablet PC, a notebook, a computer, or the like.

The user device10 comprises a user interface 12, e.g. a display and/or touch display, configured to receive a user input and/or to provide, e.g. display, information and/or data to a user of the user device 10, such as e.g. a web interface to the server 100, a source text, a translated text and/or other information.

In the exemplary user device 10 shown in Figure 2, in a first portion 14 of the user interface 12, a source text can be shown, and in a second portion 16 of the user interface 12, a translated text can be shown, which may have been provided by the server 100 upon transmitting the source text from the user device 10 to the server 100 for translation, as discussed in more detail hereinabove and hereinbelow. Therein, the first and second portions 14, 16 may be part of a web interface to the server 100.

The source text may be selected by the user, e.g. in the form of a document or other text stored on the user device and/or typed by the user using the user interface 12. Alternatively or additionally, an acoustic message may be recorded with a microphone 13 of the user device 10 and the source text may be determined based on processing the acoustic message, e.g. based on natural language processing.

Further, the user device 10 comprises a communication circuitry 18 configured to communicatively couple the user device 10 to the server 100 and to exchange data and/or information with the server 100. By way of example, the user device 10 may be couplable and/or may be configured to communicate with the server 100 (and vice versa) via an Internet connection, a WiFi connection, a Bluetooth connection, a mobile phone network, a 3G connection, an edge connection, an LTE connection, a BUS connection, a wireless connection, a wired connection, a radio connection, a near field connection an loT connection or any other connection using any appropriate communication protocol. A communication link or connection between the server 100 and the user device 10 is indicated by reference numeral 101 in Figure 1.

The user device 10 further comprises a control circuitry 20 including one or more processors 21. The user device 10, further comprises a data storage 22 or memory 22 for storing e.g. one or more one or more dictionary entries, the individual dictionary, the source text, the translated text, software instructions and/or other data or information.

The server 100 of the system 500 comprises a communication arrangement 102 configured to communicatively couple the server 100 with the user device 10 and to exchange data and/or information with the user device 10.

The server 100 further comprises a control arrangement 104 with one or more processors 105. The server 100 further comprises an artificial intelligence engine 108 and/or an artificial neural network 110. The control arrangement 104, the AI engine 108 and/or the neural network 110 may be used by the server 100 for translating a source text received from the user device 10 in a source language into a translated text in a target language different than the source language.

The server 100 further comprises a data storage 106 for storing data or information, such as e.g. the source text, the translated text, one or more dictionary entries, one or more individual dictionaries of one or more users, software instructions and/or other data or information.

For translating a given source text in a source language into a translated text in a target language, the source text may be transmitted from the user device 10 to the server 100. The server 100 may then supply the source text as input to the AI engine 108 and/or the neural network 110 and generate the translated text as an output. The translated text may then be transmitted from the server 100 to the user device 10, and e.g. displayed on the user interface 12.

For generating a dictionary entry for the individual dictionary, the user may select at least one word in the translated text, e.g. based on a corresponding user input on the user interface 12, such as based on clicking or selecting the at least one word. Based on such user input, a request for an alternative translation for the at least one word can be generated by the user device 10 and transmitted to the server 100. Upon receipt of this request, the server 100 may determine, compute and/or calculate, e.g. based on or using the AI engine 108 and/or the neural network 110, one or more translation suggestions in dependence of the grammatical context of the at least one word in at least a part of the translated text, e.g. a section and/or sentence of the translated text, in which the selected at least one word occurs in the translated text. The determined one or more translation suggestions may then be transmitted to the user device 10 and e.g. displayed on the user interface 12. The user may then select, based on a further user input, one of the one or more translation suggestions, and a corresponding request may be generated by the user device 10 and transmitted to the server 100, which request may indicate that the user intends replacing the at least one word in the translated text by the selected translation suggestion.

Optionally, the server 100 may transmit a query to the user device 10 querying the user to indicate whether the at least one word should be translated in future, in the entire source text and/or in one or more further source texts based on the selected translation suggestion. Based on a corresponding user input on the user interface 12, a user request indicating that the at least one word should be translated in future, in the entire source text and/or in one or more further source texts based on the selected translation suggestion can be generated at the user device 10 and transmitted to the server 100.

Upon receiving the user request at the server 100, upon receiving the request for an alternative translation for the at least one word, automatically, and/or based on another user input or user request, the server 100 may determine, compute and/or calculate, e.g. based on or using the Al engine 108 and/or the neural network 110, one or more dictionary suggestions, each being independent from the grammatical context of the at least one word in the at least a part of the translated text, e.g. a section and/or sentence of the translated text, in which it occurs in the translated text.

The determined one or more dictionary suggestions may, for example, differ in grammatical form from the one or more translation suggestions. For instance, each of the dictionary suggestions may be determined using a basic grammatical form of the at least one word in the respective source and/or target language, as described in more detail hereinabove and hereinbelow.

The determined one or more dictionary suggestions may then be transmitted to the user device 10 and e.g. displayed on the user interface 12. Optionally, a query for querying the user to select one of the dictionary entries may be transmitted from the server 100 to the user device 10. Further, the user may select, based on a further user input, one of the one or more dictionary suggestions, and a corresponding selection decision may be generated by the user device 10 and transmitted to the server 100, which selection decision is indicative of the dictionary suggestion selected by the user.

Based on the selected dictionary suggestion, the at least one dictionary entry may be generated. Alternatively, however, the server may automatically select one of the dictionary suggestions as dictionary entry for the individual dictionary.

Further, the generated dictionary entry may then be stored in the individual dictionary of the user in the data storage 106 of the server 100 and/or in the data storage 22 of the user device 10. This allows the generated dictionary entry and/or the individual dictionary to be applied for translating the source text and/or any other source text using the individual dictionary and thereby ensuring a consistent translation for the at least one word, regardless of the source text, regardless of a grammatical context, in which the at least one word may occur, and/or regardless of a grammatical form, in which the at least one word may occur in any source text to be translated.

Optionally, the entire source text, based on which the at least one dictionary was generated, can be re-translated by applying the at least one dictionary entry to the at least one word and each word and/or phrase corresponding thereto, e.g. each word corresponding in meaning to the at least one word but differing in grammatical form therefrom. Also other dictionary entries may be applied for translating the source text

For applying the generated dictionary entry and/or other dictionary entries of the individual dictionary to the source text and/or to a further source text, the (further) source text may be transmitted to the server 100, optionally along with the one or more dictionary entries that should be used for the translation. Any word and/or phrase in the (further) source text, for which a dictionary entry should be applied, may then be replaced by the corresponding dictionary entry, e.g. in the basic grammatical form, and the resulting supplemented (further) source text may then be translated using the AI engine 108 and/or the neural network 110. Thereby, the words and/or phrases that are replaced based on the dictionary entries can be, either sequentially or simultaneously, translated into the target language and converted into the correct grammatical form that grammatically fits into the respective section and/or sentence of the (further) translated text.

In the following, various aspect of the present disclosure are exemplary described and summarized. As described above, a user may request translation of a source text and the translated text may be provided by the server 100 to the user device 10. The translated text may be displayed on the user interface 12, the user may select and/or click on a word in the translated text and may receive one or more translation suggestions from the server 100, which e.g. can be shown in a dropdown or any other way on the user interface 12. Among the translation suggestions, the user may select one, e.g. based on clicking on one of the translation suggestions. For example, the user may click on a noun in the translated text and select a synonym for the noun from the list of translation suggestions provided by the dropdown, which then replaces the word or noun in the translated text. The server 100 or system 500 may then use the AI engine 108 and/or the neural network 110 to calculate one or more dictionary suggestions for entries in the dictionary that describe the user's previous change.

A dictionary entry suggestion may, for example, comprise the at least one word or a phrase from the source language to be translated and the at least one word or phrase in the target language. Therein, the at least one word or phrase from the source language may be based on a part of the source text, e.g. a text passage and/or sentence in the source text, which may be the basis for the corresponding passage in the translated text clicked by the user. A dictionary suggestion may not necessarily contain the source word and the word inserted as a replacement directly, but the server 100 and/or system 500 may calculate the dictionary suggestions for dictionary entries suitable for future replacements. Accordingly, the dictionary entries and/or the individual dictionary may not provide a rigid word by word translation, but may relate to generalized translations applicable in any grammatical context, in which the user's dictionary entries may be applied, e.g. in future and/or in any source text. This may mean that even though the user for instance added a verb in present tense to his dictionary, in contexts where the past tense would be the correct tense, the dictionary entry may be modified grammatically to correctly fit into the translation and/or the translated text.

For instance, the following changes may be possible: when replacing an inflected verb, the infinitive may be offered as dictionary suggestion(s) and/or may be stored as dictionary entry. This also applies to compound verbs. Further, when replacing a plural form of the at least one word, the singular form may be offered as dictionary suggestion(s) and/or may be stored as dictionary entry. Moreover, if the replacement is part of a common multi-word phrase, the complete phrase may be offered as dictionary suggestion(s) and/or may be stored as dictionary entry.

The dictionary suggestions may be displayed to the user in the user interface 12, e.g. as entries in a popup, optionally along with a question or query whether the user wants the at least one source word always to be translated with one of the dictionary suggestions. When the user is answering this question with a "Yes", the chosen dictionary entry may be automatically saved to a personal user dictionary and/or the individual dictionary.

Moreover, the user may not only receive one dictionary suggestion for the previously selected word in the translated text but more options, which the user can choose from. After answering the provided query in the user interface with a "Yes" and creating a dictionary entry, any text of the user can be (re-)translated and the dictionary entries can be applied to the user's translated texts consistently. This may mean that the user may not have to correct individual words in the translated texts anymore. If, for example, the user wishes to translate a word, term or phrase "A" with "B", the machine translation may use the user's dictionary entries for future translations. In order to demonstrate the user the influence of the dictionary on the machine translation, text passages sections and/or words, which are influenced by the dictionary entries may be graphically highlighted, e.g. by a different font color, which enables the user to evaluate the effect of his dictionary entries on the translation. Consequently, the present disclosure and invention provides the user with translations that correspond to his or her personal writing style, common formulations and/or vocabulary.

In addition, the individual dictionary can be stored e.g. in a user account on the server 100, which allows the user to access the dictionary from different user devices 10 and thus to always receive translations that are influenced by the dictionary, and consequently meet the user's desired writing style.

Furthermore, the user cannot only generate dictionary entries for his translations by the query and alternatives provided while editing the translated text, but also by creating dictionary entries manually, which can be also applied to future translations, as discussed above. For example, by clicking on a button labeled "Customization" (or similar), a dialog box may be opened on the user interface 12. In this dialog the already existing dictionary entries may be listed and may be changed, modified and/or deleted. In addition, input elements may be available, such as e.g. a source indicator for the source language, the source text, a target indicator for the target language, and the target text, which can be used to create a new dictionary entry manually.

Moreover, the individual dictionary and/or the dictionary entries can be used for training the AI engine 108 and/or the neural network 110 in order to further optimize the server 100. If, for example, different users increasingly store the same word/phrase pairs in their individual dictionaries, it can be learned that the standard translation of a word that has been output by default so far may not correspond to the actual standard of the users.

Further, the procedure described above for adding an entry to the user's dictionary can be performed without the user logging into an account on the server 100. In this case, the dictionary may be stored exclusively on the user device 10. Alternatively or additionally, the dictionary can be stored on the server 100 and can thus be accessed and used on several of the user's end devices. Moreover, the dictionary entries stored on the user device 10 can be serialized and/or shared with other users. Also, the dictionary entries stored on the server 100 can be released for shared use and editing, e.g. via a corresponding account management.

Figure 4 shows a flow chart illustrating steps of a method of generating a dictionary entry for an individual dictionary for machine translation according to an exemplary embodiment. The method illustrated in Figure 4 may alternatively or additionally relate to a method of operating a server 100 and/or a system 500 for machine translation, e.g. the server 100 and/or the system as described with reference to the foregoing figures.

Step S1 comprises receiving, at the server 100, a request for an alternative translation for at least one word of a translated text, the translated text being a machine translation of a source text from a source language into a target language different than the source language.

Step S2 comprises determining, at the server 100, e.g. using the AI engine 108 and/or the neural network 110, one or more translation suggestions for one or more alternative translations for the at least one word of the translated text, wherein each translation suggestion is determined in dependence of a grammatical context and/or in grammatical context of at least a part of the translated text. Optionally, the one or more translation suggestions may be transmitted to the user device 10, e.g. along with a query to select one of the translation suggestions.

Further, step S3 comprises receiving a request for translating the at least one word of the translated text using a selected one of the one or more translation suggestions.

In step S4, one or more dictionary suggestions are determined and/or computed by the server 100, e.g. using the AI engine 108 and/or the neural network 110, for at least one dictionary entry based on the selected one of the one or more translation suggestions, wherein each dictionary suggestion is determined independent from the grammatical context and/or out of grammatical context of the at least part of the translated text and/or of the at least one word in the at least part of the translated text. Optionally, the one or more dictionary suggestions may be transmitted to the user device 10.

Further, step S5 comprises generating the at least one dictionary entry of the individual dictionary based on at least one of the one or more dictionary suggestions, wherein the at least one dictionary entry is indicative of a meaning of the at least one word in the source language and a meaning of the at least one word in the target language. Optionally, the user may select one of the dictionary suggestions in step S5, based on which the at least one dictionary entry is generated. Alternatively, the server 100 may automatically select one of the dictionary suggestions as the at least one dictionary entry for the individual dictionary.

In an optional step S6, the entire source text may be re-translated based on and/or applying the at least one dictionary entry (and/or one or more other dictionary entries), such that the at least one word and each word and/or phrase corresponding thereto is consistently translated using the at least one dictionary entry. Alternatively or additionally, a further source text may be translated in step S6 based on and/or applying the at least one dictionary entry and/or one or more other dictionary entries.

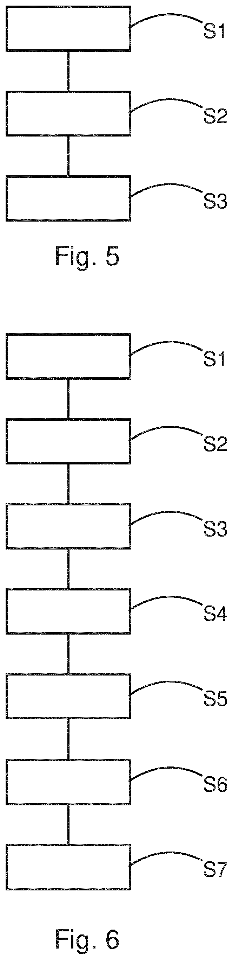

Figure 5 shows a flow chart illustrating steps of a method of generating a machine translation according to an exemplary embodiment, e.g. using the server 100 and/or the system 500 described with reference to Figures 1 to 3.

In step S1, a translation request is triggered on the user device 10, e.g. based on a user input on the user interface 12, and a source text to be translated from the source language into the target language may be selected by the user. Further, the source text and/or a query for translating the source text, optionally along with one or more dictionary entries to be used for the translation, may be transmitted to the server 100.

In step S2 the server 100 may then translate the source text into the translated text using the one or more dictionary entries provided by the user device 10 and/or using one or more dictionary entries stored in an individual dictionary on the server 100. The translated text may then be transmitted to the user device 10, e.g. in the form of a response to the query from the user device 10.

In step S3, the translated text may be displayed on the user interface 12, e.g. in portion 16 of the user interface 12, next to portion 14, in which the source text may be displayed. Optionally, one or more words of the translated text affected by one or more dictionary entries during translation, may be visually highlighted.

Figure 6 shows a flow chart illustrating steps of a method of generating a dictionary entry for an individual dictionary for machine translation according to an exemplary embodiment, e.g. using the server 100 and/or the system 500 described with reference to Figures 1 to 3.

In step S1, the user may select and/or click on at least one word in a translated text that has been provided by the server 100 previously. Based on such user input, a request for an alternative translation of the at least one word is generated and transmitted to the server 100.

In step S2, the server 100 determines, e.g. using the AI engine 108 and/or the neural network 110, one or more translation suggestions for one or more alternative translations of the at least one word, wherein each translation suggestion may reflect the grammatical context, in which the at least one word occurs in the translated text and/or the source text. Further, the one or more translation suggestions are transmitted to the user device 10.

In step S3, the one or more translation suggestions may be displayed on the user interface 12, and the user may select, based on a user input, one of the translation suggestions to be inserted into the translated text, e.g. to replace an initial translation of the at least one word. Further, a corresponding request for completion of the translation using the selected translation suggestion may be transmitted to the server 100.

In step S4, the server 100 determines the translated text using the selected translation suggestion for the at least one word, and the correspondingly translated and/or updated text is transmitted to the user device 10.

In step S5, the updated translated text may then be displayed on the user device 10, e.g. in portion 16 of the user interface 12 next to portion 14, in which the source text may be displayed. Optionally, a request for providing one or more dictionary entries and/or one or more dictionary suggestions may be generated and transmitted to the server 100.

In step S6, the server 100 determines one or more dictionary suggestions, wherein each is determined independent from the grammatical context of the at least one word in the translated text and/or in the source text. For instance, each dictionary suggestion may be determined in the basic grammatical form of the at least one word in the source and/or the target language. Further, the one or more dictionary suggestions can be transmitted to the user device 10, e.g. along with a query to select one of the dictionary suggestions as dictionary entry. Each dictionary suggestion may comprise a source indicator for the source language, e.g. "DE" for German, a target indicator for the target language, e.g. "EN" for English, the at least one word in the source language, e.g. "rennen", and the at least one word in the target language, e.g. "to sprint".

In step S7, the one or more dictionary suggestions are displayed on the user interface 12, e.g. in a dialog or dialog box, and the user can select one of the dictionary suggestions as dictionary entry. The corresponding dictionary entry may then be stored on the user device 10 and/or on the server 100 and used in future translations.

While the invention has been illustrated and described in detail in the drawings and foregoing description, such illustration and description are to be considered illustrative or exemplary and not restrictive; the invention is not limited to the disclosed embodiments. Other variations to the disclosed embodiments can be understood and effected by those skilled in the art and practicing the claimed invention, from a study of the drawings, the disclosure, and the appended claims.

In the claims, the word "comprising" does not exclude other elements or steps, and the indefinite article "a" or "an" does not exclude a plurality. The mere fact that certain measures are recited in mutually different dependent claims does not indicate that a combination of these measures cannot be used to advantage. Any reference signs in the claims should not be construed as limiting the scope.

## Claims

1. A computer-implemented method of generating, with a server (100) communicatively couplable to a user device (10) of a user, a dictionary entry for an individual dictionary for machine translation, the method comprising:
receiving, at the server (100), a request for an alternative translation for at least one word of a translated text, the translated text being representative of a machine translation of a source text from a source language into a target language different than the source language;
determining, at the server (100), one or more translation suggestions for one or more alternative translations for the at least one word of the translated text, wherein each translation suggestion is determined in dependence of a grammatical context of at least a part of the translated text;
receiving a request for translating the at least one word of the translated text using a selected one of the one or more translation suggestions;
determining one or more dictionary suggestions for at least one dictionary entry based on the selected one of the one or more translation suggestions, wherein each dictionary suggestion is determined independent from the grammatical context of the at least part of the translated text; and
generating the at least one dictionary entry of the individual dictionary based on at least one of the one or more dictionary suggestions, wherein the at least one dictionary entry is indicative of a meaning of the at least one word in the source language and a meaning of the at least one word in the target language.

2. The method according to claim 1,
wherein the one or more translation suggestions are determined at the server (100) using an artificial intelligence engine (108) and/or an artificial neural network (110) implemented on the server (100).

3. The method according to any of the preceding claims,
wherein the one or more dictionary suggestions are determined at the server (100) using an artificial intelligence engine (108) and/or an artificial neural network (110) implemented on the server (100).

4. The method according to any of the preceding claims,
wherein generating the at least one dictionary entry comprises selecting the at least one of the one or more dictionary suggestions as the at least one dictionary entry.

5. The method according to claim 4,
wherein selecting the at least one of the one or more dictionary suggestions comprises:
providing the one or more dictionary suggestions to the user device (10) and transmitting a query to the user device (10) for querying the user to select one of the one or more dictionary suggestions; and
receiving a selection decision from the user device (10), wherein the selection decision is indicative of the at least one dictionary suggestion selected by the user.

6. The method according to any of the preceding claims,
wherein the one or more dictionary suggestions are determined, at the server (100), in response to receiving the request for translating the at least one word using the selected one of the one or more translation suggestions.

7. The method according to any of the preceding claims, further comprising:
transmitting a query to the user device (10) for querying the user whether the at least one word is to be translated in a further source text based on the selected one of the one or more translation suggestions; and
wherein the one or more dictionary suggestions are determined at the server (100) in response to receiving a user request indicating that the at least one word is to be translated in a further source text based on the generated at least one dictionary entry.

8. The method according to any of the preceding claims, further comprising:
storing the at least one dictionary entry in a data storage (106) of the server (100) and/or in a data storage (22) of the user device (10).

9. The method according to any of the preceding claims,
wherein each of the one or more translation suggestions for the at least one word is determined in a first grammatical form taking into account the grammatical context of the at least part of the translated text; and
wherein each of the one or more dictionary suggestions for the at least one word is determined in a second grammatical form which differs from the first grammatical form.

10. The method according to claim 9,
wherein the first grammatical form and the second grammatical form differ in at least one of gender, number, case, temporal form, verb form, noun form, a word order, and a word sequence.

11. The method according to any of claims 9 and 10,
wherein the second grammatical form for the at least one word, in which each of the one or more dictionary suggestions is determined, corresponds to a basic grammatical form of the at least one word.

12. The method according to any of claims 9 to 11,
wherein the at least one word is a verb and wherein the first grammatical form is an inflected verb form of the at least one word and the second grammatical form is an infinitive verb form of the at least one word; and/or
wherein the at least one word is a noun and wherein the first grammatical form is a plural noun form of the at least one word and the second grammatical form is a singular noun form of the at least one word.

13. The method according to any of the preceding claims, further comprising:
determining whether the at least one word is part of a multi-word phrase; and
wherein determining the one or more dictionary suggestions for the at least one dictionary entry comprises determining the multi-word phrase.

14. The method according to any of the preceding claims, further comprising:
re-translating, at the server (100), the source text in the source language into a re-translated text in the target language based on the generated at least one dictionary entry of the individual dictionary, such that the at least one word and each further word and/or phrase corresponding to the at least one word is consistently translated in the re-translated text in accordance with the at least one dictionary entry.

15. A computer program, which when executed by one or more processors (105) of a server (100), instructs the server (100) to perform steps of the method according to any of the preceding claims; and/or
a computer-readable medium storing a computer program, which when executed by one or more processors (105) of a server (100), instructs the server (100) to perform steps of the method according to any of the preceding claims.

16. Use of an individual dictionary, comprising at least one dictionary entry generated in accordance with the method of any of claims 1 to 14, for machine translation; and/or
use of one or more dictionary entries generated in accordance with the method of any of claims 1 to 14 for training an artificial intelligence engine (108) and/or an artificial neural network (110) for machine translation.

17. A server (100) configured for performing steps of the method according to any of claims 1 to 14.
